# EUROPEAN PATENT APPLICATION

(11) **EP 4 685 313 A1**
(43) Date of publication of application: **28.01.2026**
(21) Application number: 24195198.7
(22) Date of filing: 19.08.2024
(51) Int. Cl.: E04H 4/16

(54) **METHOD AND APPARATUS FOR CLEANING POOL**

(30) Priority: 23.07.2024 CN 202410995545
(71) Applicant: Shenzhen Aiper Intelligent Co., Ltd., Shenzhen 518131 (CN)
(72) Inventor: Song, Qingxiang, Shenzhen, 518131 (CN)
(74) Representative: Wenzel Nemetzade Warthmüller Patentanwälte Part mbB

(57) **Abstract**

Disclosed are a method and an apparatus for cleaning a pool. The method may include controlling an apparatus for cleaning the pool to move on a water surface of the pool, obtaining, by at least one sensor of the apparatus, information on a distance from the apparatus to a bottom of the pool during a movement of the apparatus on the water surface, and controlling the apparatus to dive from a position on the water surface where the information on the distance is obtained to a bottom area corresponding to the position on the water surface for cleaning in a case where the distance matches a depth of a target flat area in the pool.

## Description

### TECHNICAL FIELD

The present disclosure relates to a method and an apparatus for cleaning a pool.

### BACKGROUND

For pool facilities such as swimming pools, a pool cleaning apparatus may be utilized for automatic or auxiliary cleaning. For example, the pool cleaning apparatus may be configured to run its cleaning mechanism (such as brushes) to perform operations including cleaning dirt, filtering water, absorbing debris and so on, while moving on the floor, walls (or side walls or side elevations) and/or water surface of the pool, for example when being driven by electricity.

In some pools, there may be some flat areas (sometimes also called "platforms" or "platform areas") with different heights at the bottom. Although the pool cleaning apparatus may be not configured with a positioning function or may not be able to position various flat areas in the pool well or accurately due to considerations or limitations for example in terms of cost or application scenarios, it is still expected that the pool cleaning apparatus may quickly detect and clean the flat area which has been selected as a cleaning target.

### SUMMARY

In an aspect, disclosed is a method for cleaning a pool. The method may include controlling an apparatus for cleaning the pool to move on a water surface of the pool, obtaining, by at least one sensor of the apparatus, information on a distance from the apparatus to a bottom of the pool during a movement of the apparatus on the water surface, and controlling the apparatus to dive from a position on the water surface where the information on the distance is obtained to a bottom area corresponding to the position on the water surface for cleaning in a case where the distance matches a depth of a target flat area in the pool.

In one or more embodiments, the method may further include determining the target flat area from a plurality of flat areas in the pool based on at least one of a user operation and a preset cleaning rule.

In one or more embodiments, the method may further include transmitting, to a control terminal of the apparatus for the user operation, flat area information on at least one of identification, orientation and depth of each of the plurality of flat areas to allow the target flat area to be selected based on the flat area information and through the user operation, and receiving, from the control terminal, information on the target flat area selected through the user operation.

In one or more embodiments, the method may further include determining a depth of each of a plurality of flat areas in the pool, the plurality of flat areas including the target flat area.

In one or more embodiments, the depth of each of the plurality of flat areas may be determined according to information on a plurality of distances from the apparatus to the bottom obtained by the at least one sensor when the apparatus is on the water surface.

In one or more embodiments, the case where the distance matches the depth of the target flat area may include, but is not limited to, at least one of a difference between a value of the distance and a value of the depth of the target flat area being less than a predetermined threshold, and the value of the distance being within a range of depth values corresponding to the depth of the target flat area.

In one or more embodiments, the at least one sensor may be configured on at least one of a bottom and a side of the apparatus.

In one or more embodiments, the at least one sensor may include at least one ultrasonic sensor and/or at least one image sensor.

In one or more embodiments, the controlling the apparatus to move on the water surface may include, but is not limited to, at least one of controlling the apparatus to float to and swim on the water surface, and controlling the apparatus to move to a waterline of the pool and to move along the waterline on a wall of the pool.

In another aspect, disclosed is an apparatus for cleaning the pool. The apparatus may include at least one sensor configured to obtain information on a distance from the apparatus to a bottom of the pool during a movement of the apparatus on a water surface of the pool, and at least one processor configured to perform controlling the apparatus to dive from a position on the water surface where the information on the distance is obtained to a bottom area corresponding to the position on the water surface for cleaning in a case where the distance matches a depth of a target flat area in the pool.

In one or more embodiments, the at least one processor may be further configured to perform determining the target flat area from a plurality of flat areas in the pool based on at least one of a user operation and a preset cleaning rule.

In one or more embodiments, the at least one processor may be further configured to perform transmitting, to a control terminal of the apparatus for the user operation, flat area information on at least one of identification, orientation and depth of each of the plurality of flat areas to allow the target flat area to be selected based on the flat area information and through the user operation, and receiving, from the control terminal, information on the target flat area selected through the user operation.

In one or more embodiments, the at least one processor may be further configured to perform determining a depth of each of a plurality of flat areas in the pool, the plurality of flat areas including the target flat area.

In one or more embodiments, the depth of each of the plurality of flat areas may be determined according to information on a plurality of distances from the apparatus to the bottom obtained by the at least one sensor when the apparatus is on the water surface.

In one or more embodiments, the case where the distance matches the depth of the target flat area may include, but is not limited to, at least one of a difference between a value of the distance and a value of the depth of the target flat area being less than a predetermined threshold, and the value of the distance being within a range of depth values corresponding to the depth of the target flat area.

In one or more embodiments, the at least one sensor may be configured on at least one of a bottom and a side of the apparatus.

In one or more embodiments, the at least one sensor may include at least one ultrasonic sensor and/or at least one image sensor.

In one or more embodiments, the controlling the apparatus to move on the water surface may include, but is not limited to, at least one of controlling the apparatus to float to and swim on the water surface, and controlling the apparatus to move to a waterline of the pool and to move along the waterline on a wall of the pool.

### BRIEF DESCRIPTION OF THE DRAWINGS

Fig. 1 illustrates schematically an example of a pool in an embodiment of the present disclosure.
Fig. 2 illustrates schematically an example of a pool in an embodiment of the present disclosure.
Fig. 3 illustrates schematically an exemplary apparatus for cleaning a pool in an embodiment of the present disclosure.
Fig. 4 illustrates schematically an exemplary process of detecting a flat area in a pool in an embodiment of the present disclosure.
Fig. 5 illustrates schematically an exemplary process of determining a target flat area in an embodiment of the present disclosure.
Fig. 6 illustrates schematically an exemplary process of cleaning a target flat area in an embodiment of the present disclosure.
Fig. 7 illustrates schematically an exemplary method for cleaning a pool in an embodiment of the present disclosure.

### DETAILED DESCRIPTION

Embodiments of the present disclosure will be described hereafter in detail with reference to the accompanying drawings. In the drawings, the same or equivalent parts are assigned with the same reference numbers, and their descriptions are not repeated.

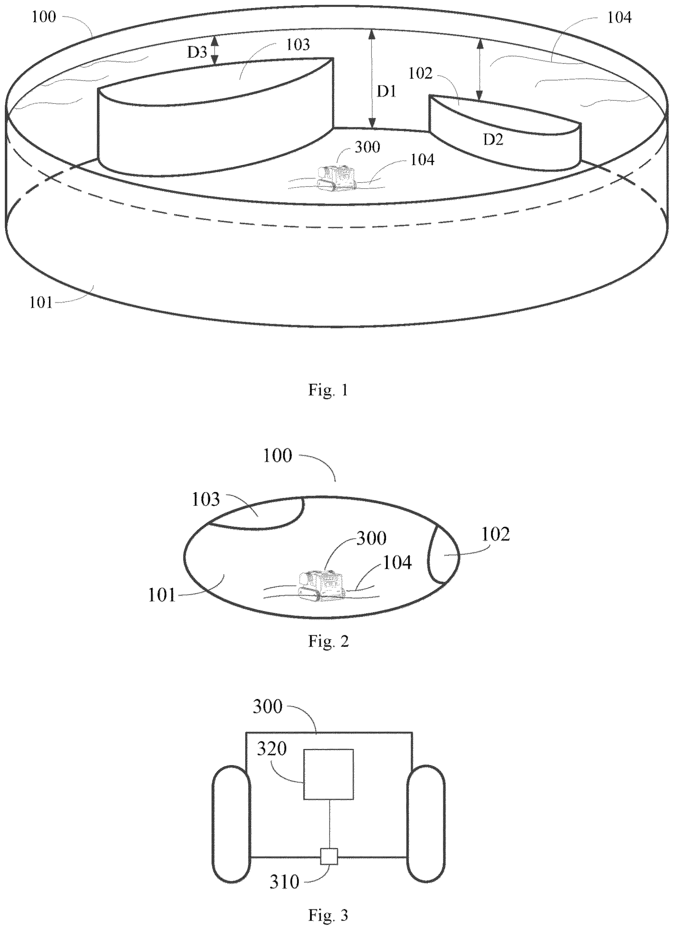

Figs. 1 and 2 illustrate schematically an exemplary pool 100 in an embodiment of the present disclosure, wherein Fig. 2 is a schematic vertical view of the pool 100.

In the example of Figs. 1 and 2, flat areas 101, 102 and 103 with different heights are configured at the bottom of the pool 100. In a case where the pool 100 is filled with a predetermined amount of water (for example, full of water or close to be full of water), where a depth of the flat area 101 below a water surface 104 of the pool 100 being denoted as D1, where a depth of the flat area 102 below the water surface 104 is denoted as D2, and where a depth of the flat area 103 below the water surface 104 is denoted as D3, D1, D2 and D3 are different from each other. Thus, for each flat area in the pool 100, the depth of the flat area below the water surface 104 (also referred to as "the depth of the flat area" herein) may identify the flat area.

In another example, more or less flat areas than those in the example as shown in Figs. 1 and 2 may be configured in the pool 100, and these flat areas may have different physical sizes, shapes, positions, and so on from those in the example as shown in Figs. 1 and 2. The present disclosure is not limited to any specific shape and physical size of the pool 100, nor to any specific number of flat areas in the pool 100 and any specific shape, physical size, position and the like of each flat area.

As shown in Fig. 1 and Fig. 2, the apparatus 300, as an example of the pool cleaning apparatus, may be configured to be movable on the water surface 104. The apparatus 300 may moves on the water surface 104 in one or more manners. For example, the apparatus 300 may float on the water surface 104 like a general ship, and swim on the water surface 104 with the bottom of the apparatus 100 facing downward (i.e., toward the bottom of the pool 100). For example, the apparatus 300 may also float on the water surface 104 with the bottom of the apparatus 100 facing downwards, and swim near or close to the wall of the pool 100 along a waterline where the water surface 104 meets the walls of the pool 100, that is, the so-called "swimming along edge". For example, the apparatus 300 may also move to the waterline where the water surface 104 meets the walls of the pool 100, and then move along the waterline on the wall with the left or right or rear side of the apparatus 300 facing downwards and the bottom of the apparatus 300 being close to or facing the wall.

In one or more embodiments, a buoyancy control mechanism (not shown, which may include, for example, a gas cell and/or a gas storage bin and/or a gas pump) may be configured in the apparatus 300, through which the buoyancy of the apparatus 300 in the water of the pool 100 may be adjusted, so that the apparatus 300 may float to the water surface 104 or dive to one of the flat areas 101, 102 and 103 at the bottom of the pool 100, and may also swim on at least one of the water surface 104, the flat area 101, the flat area 102, the flat area 103 and the wall of the pool 100, for example, with the cooperation of a traveling mechanism of the apparatus 300 (not shown, which may include, for example, a motor, traveling crawlers and/or traveling wheels, and so on of the apparatus 300).

In one or more embodiments, the apparatus 300 may be configured to move to the waterline where the water surface 104 meets the walls of the pool 100, and move along the waterline on the walls of the pool 100. For example, the apparatus 300 may be configured to be able to crawl on the walls of the pool 100 through its traveling mechanism. In such a case, for example, a water nozzle (not shown) may be configured at the top of the apparatus 300, and water suctioned from the pool 100 may be ejected from the water nozzle at least when the apparatus 300 is located on the wall, so that a pressure of the apparatus 300 on the wall may be increased, thereby ensuring that the apparatus 300 may crawl on the wall.

Further, the apparatus 100 may also be configured to move at the bottom of the pool 100 to a junction between the bottom and the wall by means of the traveling mechanism of the apparatus 100, and then float to the waterline by increasing the buoyancy of the apparatus 100 itself in the water of the pool 100, for example by configuring the buoyancy control mechanism in the apparatus 100 and aerating the gas cell in the buoyancy control mechanism.

In one or more embodiments, the cleaning mechanism (not shown, which may include, for example, a water suction port, a roller brush, a filter, and so on) in the apparatus 300 may be activated while the apparatus 300 is moving or located in any area of the pool 100, such as the water surface 104, the flat area 101, the flat area 102, the flat area 103 and the wall of the pool 100, so as to clean the pool 100.

As shown in Fig. 3, at least one sensor 310 may be configured on the bottom of the apparatus 300 to obtain information on a distance from the apparatus 300 to the bottom of the pool while the apparatus 300 is swimming or floating on the water surface 104, wherein the bottom of the pool may include the flat area 101, the flat area 102 and the flat area 103.

One or more sensors 310 may be configured at any suitable position on the body of the apparatus 300. For example, one or more sensors 310 may be configured on at least one of the bottom and side of the apparatus 300. By configuring one or more sensors 310 on the side of the apparatus 300, the apparatus 300 may obtain information on the distance from the apparatus 300 to the bottom of the pool including the flat area 101, the flat area 102 and the flat area 103, while the apparatus 300 is moving along the waterline on the wall of the pool 100 or is located at the waterline for example with its bottom contacting the wall and traveling direction consisting with the waterline.

The at least one sensor 310 in the apparatus 300 may include a range sensor such as an ultrasonic sensor, an image sensor such as a camera, or one or more sensors of any other suitable types which may sense a distance from the apparatus 300 to an obstacle or target in water in a specified direction.

For example, at least one image sensor may be configured on at least one of the bottom and side of the apparatus 300. While the apparatus 300 is moving or located on the water surface 104, at least one image may be captured by the at least one image sensor for a pool area below the water surface where the apparatus 300 is currently located, and the distance of the apparatus 300 to the bottom of the pool including the flat area 101, the flat area 102 and the flat area 103 may be estimated based on the at least one captured image by image processing, for example through an image convolution neural network.

For example, at least one ultrasonic sensor may be configured on at least one of the bottom and side of the apparatus 300. For example, an ultrasonic generator and an ultrasonic receiver may be configured at the same side of the apparatus 300, so that the distance may be estimated according to a propagation speed of the ultrasonic wave in the water and the time taken for the ultrasonic wave to return after encountering an obstacle. Ultrasonic wave may have a strong penetrability to liquid and may be applied even in a case of insufficient light, and the distance may be estimated easily. Therefore, by configuring the at least one sensor 310 of the apparatus 300 by the ultrasonic sensor, for example, the distance from the apparatus 300 to the pool area below the apparatus 300 may be sensed efficiently and accurately in a low-cost and simple manner.

In some embodiments, the apparatus 300 may be represented by the sensor 310, and a current distance sensed by the sensor 310 may be used as the current distance from the apparatus 300 located on the water surface 104 to the bottom of the pool. In another embodiment, a distance from a centroid of the apparatus 300 to the bottom of the pool or a distance from the current water surface position of the apparatus 300 to the bottom of the pool may also be calculated as the current distance from the apparatus 300 located on the water surface 104 to the bottom of the pool, for example according to one or more of a currently sensed distance from the sensor 310 to the bottom of the pool, a physical size of the apparatus 300, a height of the apparatus 300 above the water surface 104, and so on. The current distance from the apparatus 300 located on the water surface 104 to the bottom of the pool may be defined in different ways as required.

As shown in Fig. 3, at least one processor 320 may be further configured in the apparatus 300, which may be or include a central processing unit (CPU), a graphics processing unit (GPU), a field programmable gate array (FPGA) or any other suitable chip or integrated circuit usable for operations and/or controls. The at least one processor 320 may be connected and/or communicated with one or more another mechanisms or components in the apparatus 300, such as a memory, a register, a traveling mechanism, a buoyancy control mechanism, a cleaning mechanism, a communication mechanism, a communication interface, an information display/feedback mechanism, a control terminal, an operation panel or buttons of the apparatus 300, or the like, by any suitable means including wired and/or wireless manners.

The at least one processor 320 may be configured to perform processing and/or controlling actions of the apparatus 300 such as floating to the surface of the water 104, swimming on the surface of the water 104, diving into the pool 100, moving on a flat area in the pool 100, moving on the wall of the pool 100, operating a cleaning mechanism to clean the passing or located area and so on, according to predetermined instructions, for example, one or more sets of program instructions pre-stored in the memory of the apparatus 300.

For example, the at least one processor 320 may receive sensed information from the sensor 310 through internal connections of the apparatus 300, and perform calculation and/or processing based on the received sensed information, to determine the current distance from the apparatus 300 located on the water surface 104 to the bottom of the pool. In another example, the at least one processor 320 may also control one or more mechanisms in the apparatus 300, such as the traveling mechanism and the buoyancy control mechanism, to act in a specified way through electrical signals or instruction messages, so that the apparatus 300 may perform actions or operations such as floating to the water surface 104, swimming on the water surface 104, diving into the pool 100, moving on the flat area in the pool 100, moving on the wall of the pool 100, operating the cleaning mechanism to clean the area passing by or where it is located, and so on.

Before the control apparatus 300 cleans the flat area selected as the cleaning target in the pool 100, a depth of each flat area in the pool 100 may be determined.

In one or more embodiments, the depth of each flat area in the pool 100 may be determined according to internal data pre-stored in the apparatus 300 and/or external data provided to the apparatus 300 (for example, input through a control terminal or a control panel of the apparatus 300), wherein the internal data and/or external data may include, but are not limited to, at least one of: data about the physical size of the pool 100, such as a maximum depth of the pool 100 relative to the upper edge of the wall of the pool 100; data about the physical size of each platform in the pool 100, such as a height of each platform relative to the lowest flat area of the pool 100, a distance of each platform relative to the upper edge of the wall of the pool 100, or the like; data about a usual water filling amount (for example, the maximum water filling amount) of the pool 100, or the usual position of the water surface 104; and so on.

For example, a depth usually below the water surface 104 for each platform i (i being a natural number) in the pool 100 may be calculated as (Di-Ds) according to the depth Di of each platform i in the pool 100 relative to the upper edge of the wall of the pool 100 and the distance Ds of the water surface 104 relative to the upper edge of the wall of the pool 100. Also, the depth Di of each platform i in the pool 100 relative to the upper edge of the wall of the pool 100 may be used as an approximate depth usually below the water surface 104 for each platform i in the pool, or the like.

Further, the depth of each flat area may also be any value within a corresponding depth range, or may be a representative value within the corresponding depth range. For example, the depth of each flat area in the pool 100 may be any value within the range [Di-Ds-α1, Di-Ds+α2], or it may be a value within this range such as (Di-Ds) or (Di-Ds+(α2-α1)/2), where α1 and α2 are adjustment amounts greater than or equal to 0. In different embodiments, α1 and α2 may be or may be not integers, and may be identical or different.

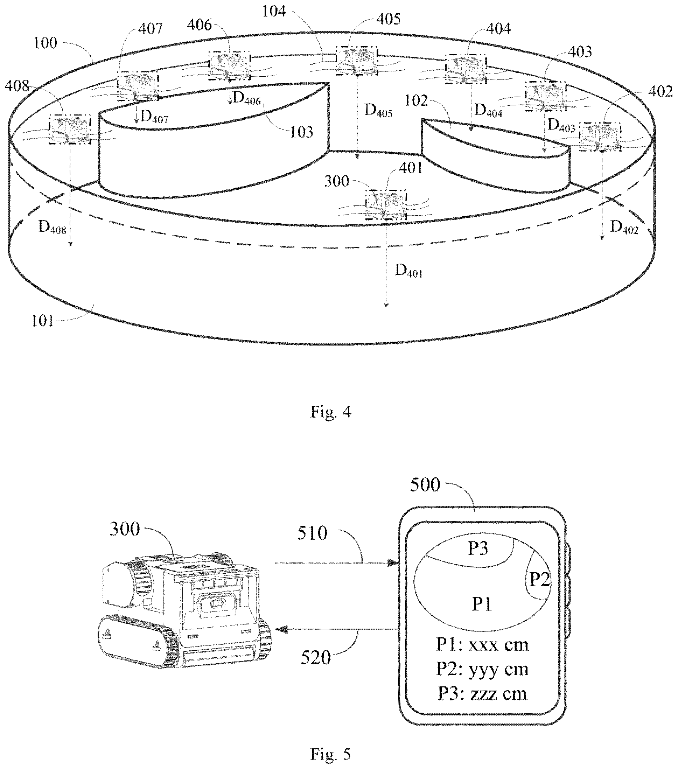

In an embodiment, as shown in Fig. 4, information on a plurality of distances from the apparatus 300 to the bottom of the pool 300 may be obtained through the at least one sensor 310 configured at the bottom and/or side of the apparatus 300 when the apparatus 300 is located on the water surface 104, for example during a period when the apparatus 300 is cleaning the water surface 104, when the apparatus 300 is cleaning the waterline, when the apparatus 300 is swimming along the waterline or along a predetermined route on the water surface 104, or the like. For example, the obtained information may include a distance value D₄₀₁ obtained when the apparatus 300 is at the position 401 of the water surface 104, a distance value D₄₀₂ obtained when the apparatus 300 is at the position 402 of the water surface 104, a distance value D₄₀₃ obtained when the apparatus 300 is at the position 403 of the water surface 104, a distance value D₄₀₄ obtained when the apparatus 300 is at the position 404 of the water surface 104, a distance value D₄₀₅ obtained when the apparatus 300 is at the position 405 of the water surface 104, a distance value D₄₀₆ obtained when the apparatus 300 is at the position 406 of the water surface 104, a distance value D₄₀₇ obtained when the apparatus 300 is at the position 407 of the water surface 104, a distance value D₄₀₈ obtained when the apparatus 300 is at the position 408 of the water surface 104, and the like.

Then, the obtained distance values D₄₀₁, D₄₀₂, D₄₀₃, D₄₀₄, D₄₀₅, D₄₀₆, D₄₀₇, D₄₀₈, and the like may be statistically classified or clustered by any suitable method such as equal-width grouping and K-means clustering, so that multiple sets or clusters are determined for the distance values, for example S1={D₄₀₁, D₄₀₂, D₄₀₅, D₄₀₈, ...}, S2={D₄₀₃, D₄₀₄, ...}, S3={D₄₀₆, D₄₀₇, ...}, and the like. Each set or cluster may correspond to a flat area in the pool 100. For example, S1 may correspond to the flat area 101, S2 may correspond to the flat area 102, and S3 may correspond to the flat area 103.

Then, the depth of each flat area may be determined according to the corresponding distance value set or cluster for each flat area. For example, an average value of the values in each distance value set or cluster may be used to represent the depth of the corresponding flat area, or the data value of the center point in the distance value cluster may also be used as the depth of the corresponding flat area, or the like. Further, two or more values representing the corresponding depth range may also be determined for each flat area and used as two or more depth values for each flat area.

Then, a target flat area as a cleaning target in the pool 100 may be selected.

In some embodiments, one or more flat areas from the flat areas 101, 102 and 103 in the pool 100 may be determined as the target flat area, according to a preset cleaning rule (for example, a cleaning rule configured and stored in advance in the memory of the apparatus 300), for example after determining or obtaining the information on the depth of each flat area in the pool 100.

For example, the preset cleaning rule may be configured to clean all flat areas in the pool 100, and the flat areas 101, 102, and 103 may be selected as the target flat area one by one in any suitable order. For example, it may be determined whether the cleaning work of all flat areas in the pool 100 has been completed according to whether the number of the cleaned flat areas reaches a total number of all flat areas in the pool 100.

In some embodiments, one or more flat areas from the flat areas 101, 102 and 103 in the pool 100 may also be determined as the target flat area according to operations performed by a user of the apparatus 300 through the control terminal of the apparatus 300.

For example, as shown in Fig. 5, the apparatus 300 may be equipped with a wireless communication function and may be configured to transmit flat area information 510 on each flat area 101, 102 and 103 in the pool 100 to the control terminal 500 of the apparatus 300.

Examples of the flat area information 510 may include, but is not limited to, one or more of the followings: an identification of each flat area, such as an identification or name "P1" for the flat area 101, an identification or name "P2" for the flat area 102, an identification or name "P3" for the flat area 103, and the like; a depth of each flat area, such as a depth D1=xxx cm for the flat area 101, a depth D2=yyy cm for the flat area 102, a depth D3=zzz cm for the flat area 103, a depth range {D1ₘᵢₙ, D1ₘₐₓ} for the flat area 101, a depth range {D2ₘᵢₙ, D2ₘₐₓ} for the flat area 102, a depth range {D3ₘᵢₙ, D3ₘₐₓ} for the flat area 103, and the like; a position of each flat area, for example, a general position of the flat area 102 relative to the flat area 101, a general position of the flat area 103 relative to the flat areas 101 and 102, a position of the flat area 101 in the pool 100, a position of the flat area 102 in the pool 100, a position of the flat area 103 in the pool 100, and so on.

For example, information on a layout of the pool 100 and respective flat areas in the pool 100 may be provided to the user on the control terminal 500 according to the flat area information 510 for example through image, graphic, text, voice or in any other suitable manners. The user may be allowed to select one or more flat areas from the flat areas 101, 102 and 100 in the pool 100, for example by clicking the keys on the control terminal 500, touching the screen of the control terminal 500, inputting text or voice commands, or by any other suitable means. An operation result 520 may be notified to the apparatus 300, which may include, but is not limited to, for example one or more of: information on the selection of the target flat area through the user operation; information on the identifications or depths of the one or more selected target flat areas; a cleaning order, for example an order or sequence of the identifications or depths of one or more selected target flat areas; and the like.

In some embodiments, the flat area information 510 may also be information stored at the side of the control terminal 500 and/or information obtained from the side of the control terminal 500 (for example, input or imported by a user). Thus, for example, transmissions of the platform area information 510 from the apparatus 300 to the control terminal 500 may be omitted, and the control terminal 500 may directly determine the target flat area according to the user's operations and notify the apparatus 300 of the operation result 520.

In some embodiments, the apparatus 300 may be provided with an operation panel (not shown) on its body. In this case, the user may set cleaning rules and/or select the depth and/or cleaning order of one or more target flat areas by operating buttons or a touch screen on the panel for example before making the apparatus 300 enter the pool 100.

Then, for example, the apparatus 300 may move on the water surface 104 under the control of the processor 320, and obtain information on the distance from the apparatus 300 to the bottom of the pool 100 through at least one sensor 310 during the movement on the water surface 104. In a case where the obtained distance matches the depth of the target flat area in the pool 100, for example, the apparatus 300 may be controlled by the processor 320 to dive from the water surface position obtaining the information on the distance to the bottom area corresponding to the water surface position for cleaning.

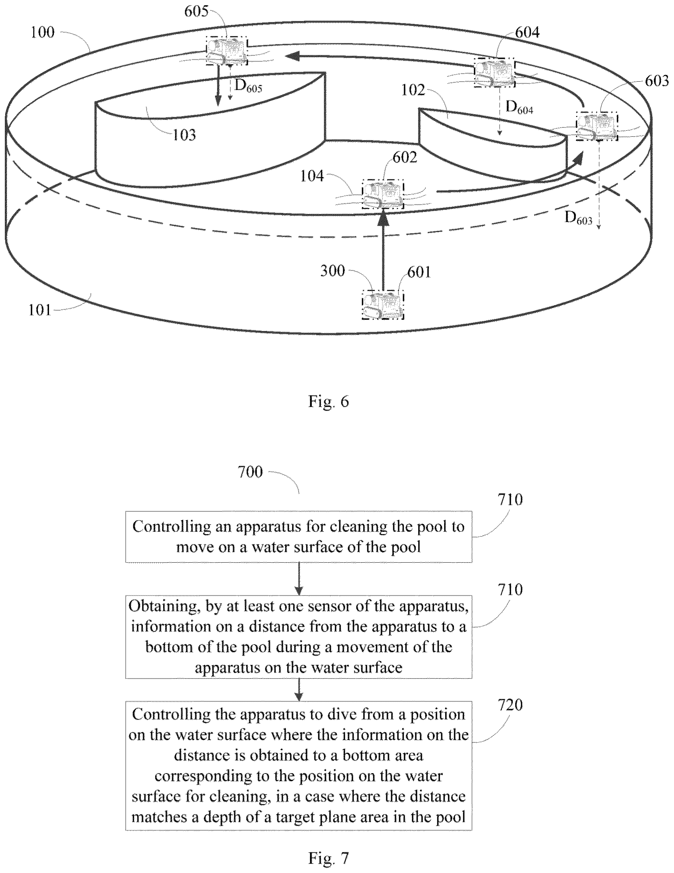

For example, as shown in Fig. 6, in a case where the processor 320 of the apparatus 300 determines that the current target flat area is the flat area 103, the processor 320 may control the apparatus 300 to move to the water surface 104.

For example, the processor 320 may check whether the apparatus 300 is currently located on the water surface 104 according to sensed values of a depth sensor based on water pressure in the control apparatus 300 and/or previous actions of the apparatus 300. For example, the processor 320 may check whether the apparatus 300 has finished cleaning the flat area 101 which has been selected as a previous target flat area.

If the processor 320 determines that the apparatus 300 is currently not on the water surface 104, for example, is currently located at a position 601 on the flat area 101, it may control the apparatus 300 to move to a position 602 on the water surface 104. For example, the processor 320 may control the buoyancy control mechanism of the apparatus 300 to increase the buoyancy of the apparatus 300 in the water through a command signal, so that the apparatus 300 floats to the position 602 of the water surface 104, as shown by a solid arrow from the position 601 to the position 602 in Figure 6. The processor 320 may also control the running mechanism of the apparatus 300 to operate through a command signal, and drive the apparatus 300 to move to the water surface 104 along the wall of the pool 100 and reach the position 602 of the water surface 104.

Then, the processor 320 may control the apparatus 300 to move on the water surface 104. For example, the apparatus 300 may be controlled to swim on the water surface 104 according to a specified trajectory (for example, along the waterline, by traversing the water surface 104 according to a zigzag trajectory, by traversing the water surface 104 according to a rectangular-ambulatory-flat trajectory, and so on) or move along the waterline on the wall.

During the movement of the apparatus 300 on the water surface 104, the at least one sensor 310 of the apparatus 300 may obtain information on a distance from the apparatus 300 to the bottom of the pool 100 by a predetermined sampling frequency, and the processor 320 may determine a real-time distance from the apparatus 300 to the bottom of the pool 100 according to the obtained real-time information, and check whether the real-time distance matches the depth of the target flat area 103.

For example, when the apparatus 300 moves to the position 603 of the water surface 104, the processor 320 may determine that the current distance from the apparatus 300 to the bottom of the pool 100 is D₆₀₃ according to the real-time information from the sensor 310. Then, the processor 320 may check whether D₆₀₃ matches the depth of the target flat area 103 by one or more methods, for example by checking whether a difference between D₆₀₃ and the depth D3 of the target flat area 103 satisfies a predetermined threshold condition (for example, being less than a predetermined threshold or within a predetermined threshold range), or by checking whether D₆₀₃ is within a range of depth values corresponding to the depth of the target flat area 103.

As shown in Fig. 6, the processor 320 determines that D₆₀₃ does not match the depth D3 of the target flat area 103, and controls the apparatus 300 to continue moving on the water surface 104.

When the apparatus 300 moves to the position 604 of the water surface 104, the processor 320 may determine that the current distance from the apparatus 300 to the bottom of the pool 100 is D₆₀₄ according to the real-time information from the sensor 310, and check whether D₆₀₄ matches the depth of the target flat area 103.

As shown in Fig. 6, the processor 320 determines that D₆₀₄ does not match the depth D3 of the target flat area 103, and controls the apparatus 300 to continue moving on the water surface 104.

When the apparatus 300 moves to the position 605 of the water surface 104, the processor 320 may determine that the current distance from the apparatus 300 to the bottom of the pool 100 is D₆₀₃ according to the real-time information from the sensor 310, and check whether D₆₀₅ matches the depth of the target flat area 103.

As shown in Fig. 6, the processor 320 determines that D₆₀₅ matches the depth D3 of the target flat area 103 for example by determining that a difference between D₆₀₅ and the depth D3 of the target flat area 103 satisfies a predetermined threshold condition or that D₆₀₅ is within the range of depth values corresponding to the depth of the target flat area 103. Then, the processor 320 may determines that the apparatus 300 at the position 605 of the water surface 104 has reached above the target flat area 103, and may control the apparatus 300 to dive from the position 605 to the bottom area below the position 605, i.e. the flat area 103, as shown by the solid arrow pointing downward from the position 605 in Figure 6, for example by instructing the traveling mechanism to suspend and by instructing the buoyancy control mechanism to reduce the buoyancy of the apparatus 300 in the water and/or instructing to suspending spraying water from the water nozzle, and then control the apparatus 300 to begin to clean the flat area 103.

During the process of cleaning the flat area 103 by the apparatus 300, the processor 320 may check whether the apparatus 300 is in the flat area 103 and/or whether it reaches a boundary of the flat area 103, for example according to changes of a pitch angle and roll angle of the apparatus 300, sensed values from sensors located at the bottom and/or side of the apparatus 300 (for example including the sensor 310), and so on, to control action modes of the traveling mechanism of the apparatus 300 so that the apparatus 300 may clean the flat area 103 for example by a planned cleaning route.

After the apparatus 300 finishes cleaning the flat area 103, if there are still target flat areas that have not been cleaned, for example in a case where a maximum number of target flat areas has not been reached and/or a queue of target flat areas is not empty or the like, the apparatus 300 may be controlled to move from the flat area 103 to the water surface 104, to search for a next target flat area according to a process similar to the above process for searching for the flat area 103, and then to dive from the water surface 104 to the found target flat area and clean it. Such a process may be repeated until all the target flat areas are cleaned.

In the above process, the apparatus 300 may also transmit, to the control terminal 500, information for example on the target flat area being searched, the target flat area being cleaned, the target flat area having been cleaned, or the like. According to the received information, the control terminal 500 may show the user of a working state and/or working progress of the apparatus 300 for example in one or more manners including images, graphics, text, voice or any other suitable manners. The user may monitor by viewing and/or operating the control terminal 500. For example, the user may adjust or suspend or stop the cleaning for the current target flat area by operating the control terminal 500, or adjust a cleaning order for the remaining target flat areas, or delete one or more of the remaining target flat areas, or add one or more new target flat areas, and so on.

Fig. 7 illustrates an exemplary method 700 for cleaning a pool in an embodiment of the present disclosure, which may be performed for example by the processor 320 of the apparatus 300.

As shown in Fig. 7, the method 700 may include:
a step 710 wherein the apparatus 300 may be controlled to move on the water surface 104 of the pool 100;
a step 720 wherein information on the distance from the apparatus 300 to the bottom of the pool 100 (such as D₆₀₃, D₆₀₄, D₆₀₅ or the like in the above examples) may be obtained through at least one sensor 310 of the apparatus 300 during the movement of the apparatus 300 on the water surface 104 of the pool 100; and
a step 720 wherein the apparatus 300 may be controlled to dive from the water surface position where the information on the distance is obtained (for example, the position 605 of the water surface 104 in the above examples) in a case where the obtained distance (such as D₆₀₃, D₆₀₄, D₆₀₅, and the like in the above examples) matches the depth of the target flat area in the pool 100 (for example, the depth D3 of the flat area 103 in the above examples).

According to the method 700, for example, the apparatus 300 may be controlled to quickly find the target flat area in the pool 100 selected as the cleaning target and clean it through a process of "moving to the water surface, detecting depths, matching depths, and diving for cleaning".

In one or more embodiments, the method 700 may further include determining a target flat area from a plurality of flat areas in the pool 100 based on at least one of a user operation and a preset cleaning rule.

For example, the apparatus 300 may transmit flat area information on at least one of identification, position and depth of each of a plurality of flat areas (e.g., flat areas 101, 102, 103, etc.) in the pool 100 to the control terminal 500 for the user operations, so that the user may be allowed to select one or more target flat areas through the control terminal 500 based on the flat area information. Further, the apparatus 300 may also receive, from the control terminal 500, information on the user's selection of the target flat area and/or one or more selected target areas. Thus, for example, the user of the apparatus 300 may monitor and adjust the cleaning process of the apparatus 300.

For example, the apparatus 300 may determine a target flat area from a plurality of flat areas in the pool 100 based on a preset cleaning rule. Thus, for example, the user's operation may be reduced or even omitted, and an automatic cleaning process may be realized.

In one or more embodiments, the method 700 may further include determining the depth of each of the plurality of flat areas (e.g., flat areas 101, 102, 103, etc.) in the pool 100.

For example, a depth or depth range for each flat area may be determined based on information on a plurality of distances from the apparatus 300 to the bottom of the pool 100 (for example, D₄₀₁, D₄₀₂, D₄₀₃, D₄₀₄, D₄₀₅, D₄₀₆, D₄₀₇, D₄₀₇, or the like) obtained by the sensor 310 during a period when the apparatus 300 is located on the water surface 104, for example while the apparatus 300 is cleaning the water surface 104 or performing a waterline cleaning or the like. Thus, for example, the apparatus 300 may adapt automatically to different pool layouts without spending extra time, and it is not necessary to store in advance or require the user to input manually (sometimes, the user may not know data related to the pool structure) information on the pool layout, so that a cleaning efficiency and the user experience may be improved, the data storage capacity of the apparatus 300 may be saved, and network traffics may be reduced.

Due to various predictable or unpredictable factors such as a change of the height of the water surface 104, a change of a degree to which the apparatus 300 floats out of the water surface 104, the fluctuation of the water surface 104, the flatness and levelness of the flat area at the bottom of the pool 100 and so on, even for the same position in the same flat area, the sensed results by the sensors 310 on the apparatus 300 may be different every time. However, considering that there are usually significant differences between the heights or depths of respective flat areas in the pool 100, it may be determined whether the distance from the apparatus 300 on the water surface 104 sensed by the sensor 310 to the bottom of the pool matches the depth of the target flat area by checking whether a difference between the sensed distance value and the depth of the target flat area is less than a predetermined threshold and/or whether the sensed distance value is within a range of the depth values corresponding to the depth of the target flat area. Thus, for example, the influence of various predictable or unpredictable factors on the judgments, such as the change of the height of the water surface 104, the change of the degree to which the apparatus 300 floats out of the water surface 104, the influence of the fluctuation of the water surface 104, and the flatness and levelness of the flat area at the bottom of the pool 100, may be avoided.

The basic principles of the present disclosure have been described above in connection with the embodiments. However, it is appreciated that the advantages, benefits, effects, and so on, which have been mentioned herein, are only examples rather than limitations, and these advantages, benefits, effects, and so on should not be considered as necessary for each embodiment of this disclosure. In addition, the foregoing details are only for the purpose of illustration and easy understanding, rather than limitations, and the foregoing details do not limit that the present disclosure must be implemented with the foregoing details.

The block diagrams of devices, apparatuses, equipment and systems involved in this disclosure are only illustrative examples and are not intended to require or imply that they must be connected, arranged or configured in the manners shown in the block diagrams. In different embodiments, these devices, apparatuses, equipment and systems may be connected, arranged or configured in any suitable manners.

In addition, wordings such as "including", "comprising" and "having" are open words, which mean and is interchangeable with the wording "including but not limited to". The wordings "or" and "and" herein refer to and may be interchangeable with "and/or" unless the context clearly indicates otherwise. The wording "such as" herein refers to and may be interchangeable with the phrase "such as but not limited to".

It is appreciated that in the apparatuses, equipment and methods of the present disclosure, each component or step may be decomposed and/or recombined. Any decomposition and/or recombination should be regarded as equivalents of the present disclosure.

In this disclosure, modifiers without quantifiers such as "first" and "second" are intended to distinguish different elements/components/circuits/modules/apparatuses/steps, and are not used to emphasize an order, positional relationship, importance, priority level, or the like. Sometimes, modifiers with quantifiers such as "first piece of" and "second piece of" may be used to emphasize the order, positional relationship, importance, priority level and so on for different components/components/circuits/modules/apparatuses/steps.

The foregoing description has been presented for purposes of illustration and description. This description is not intended to limit the embodiments of the present disclosure to the forms disclosed herein. Although several example aspects and embodiments have been described above, those skilled in the art may recognize some variations, modifications, changes, additions and sub-combinations thereof.

## Claims

1. A method for cleaning a pool, comprising:
controlling an apparatus for cleaning the pool to move on a water surface of the pool;
obtaining, by at least one sensor of the apparatus, information on a distance from the apparatus to a bottom of the pool during a movement of the apparatus on the water surface; and
controlling the apparatus to dive from a position on the water surface where the information on the distance is obtained to a bottom area corresponding to the position on the water surface for cleaning, in a case where the distance matches a depth of a target flat area in the pool.

2. The method of claim 1, further comprising:
determining the target flat area from a plurality of flat areas in the pool based on at least one of a user operation and a preset cleaning rule.

3. The method of claim 2, further comprising:
transmitting, to a control terminal of the apparatus for the user operation, flat area information on at least one of identification, orientation and depth of each of the plurality of flat areas, to allow the target flat area to be selected based on the flat area information and through the user operation; and
receiving, from the control terminal, information on the target flat area selected through the user operation.

4. The method of any one of claims 1 to 3, further comprising:
determining a depth of each of a plurality of flat areas in the pool, the plurality of flat areas including the target flat area.

5. The method of claim 4, wherein the determining the depth of each of the plurality of flat areas comprises:
determining the depth of each of the plurality of flat areas according to information on a plurality of distances from the apparatus to the bottom obtained by the at least one sensor when the apparatus is on the water surface.

6. The method of any one of claims 1 to 5, wherein the case where the distance matches the depth of the target flat area comprises at least one of:
a difference between a value of the distance and a value of the depth of the target flat area being less than a predetermined threshold; and
the value of the distance being within a range of depth values corresponding to the depth of the target flat area.

7. The method of any one of claims 1 to 6, wherein the at least one sensor is configured on at least one of a bottom and a side of the apparatus.

8. The method of any one of claims 1 to 7, wherein the at least one sensor comprises at least one ultrasonic sensor and/or at least one image sensor.

9. The method of any one of claims 1 to 8, wherein the controlling the apparatus to move on the water surface comprises at least one of:
controlling the apparatus to float to and swim on the water surface; and
controlling the apparatus to move to a waterline of the pool and to move along the waterline on a wall of the pool.

10. An apparatus for cleaning a pool, comprising:
at least one sensor configured to obtain information on a distance from the apparatus to a bottom of the pool during a movement of the apparatus on a water surface of the pool; and
at least one processor configured to perform controlling the apparatus to dive from a position on the water surface where the information on the distance is obtained to a bottom area corresponding to the position on the water surface for cleaning, in a case where the distance matches a depth of a target flat area in the pool.

11. The apparatus of claim 10, wherein the at least one processor is further configured to perform determining the target flat area from a plurality of flat areas in the pool based on at least one of a user operation and a preset cleaning rule.

12. The apparatus of claim 11, wherein the at least one processor is further configured to perform:
transmitting, to a control terminal of the apparatus for the user operation, flat area information on at least one of identification, orientation and depth of each of the plurality of flat areas, to allow the target flat area to be selected based on the flat area information and through the user operation; and
receiving, from the control terminal, information on the target flat area selected through the user operation.

13. The apparatus of any of claims 10 to 12, wherein the case where the distance matches the depth of the target flat area comprises at least one of:
a difference between a value of the distance and a value of the depth of the target flat area being less than a predetermined threshold; and
the value of the distance being within a range of depth values corresponding to the depth of the target flat area.

14. The apparatus of any of claims 10 to 13, wherein the at least one sensor is configured on at least one of a bottom and a side of the apparatus.

15. The apparatus of any of claims 10 to 14, wherein the at least one sensor comprises at least one ultrasonic sensor and/or at least one image sensor.
